# EUROPEAN PATENT APPLICATION

(11) **EP 1 768 202 A1**
(43) Date of publication of application: **28.03.2007**
(21) Application number: 06730407.1
(22) Date of filing: 29.03.2006
(51) Int. Cl.: H01M 4/02, H01M 10/40

(54) **CYLINDRICAL LITHIUM SECONDARY BATTERY**

(30) Priority: 04.04.2005 JP 2005107253
(71) Applicant: Matsusita Electric Industrial Co., Ltd., Kadoma-shi, Osaka 571-8501 (JP)
(72) Inventor: FUJIKAWA, Masato,, Chuo-ku, Osaka-shi, Osaka 540-6319, (JP); SUZUKI, Kohei,, Chuo-ku, Osaka-shi, Osaka 540-6319, (JP); INOUE, Kaoru, Chuo-ku, Osaka-shi, Osaka 540-6319, (JP); SHIMADA, Mikinari, Chuo-ku, Osaka-shi, Osaka 540-6319, (JP)
(74) Representative: TBK-Patent
(86) International application number: PCT/JP2006/006459
(87) International publication number: WO 2006/106731

(57) **Abstract**

A cylindrical lithium secondary battery that is excellent in resistance to short-circuits, is capable of preventing a capacity loss due to dropping, and has a good balance in battery characteristics. The cylindrical lithium secondary battery includes: a cylindrical battery can; an electrode assembly; and a non-aqueous electrolyte. The electrode assembly has a porous heat-resistant layer that is interposed between the positive electrode and the negative electrode. The electrode assembly has a central cavity into which a hollow mandrel is inserted. The hollow mandrel has a slit that extends along the entire length thereof. The outer diameter A of the hollow mandrel and the width B of the slit satisfy the relation: 0.1≦B/A≦0.6.

## Description

### Technical Field

The present invention relates to a lithium secondary battery with a high level of safety that is excellent in resistance to short-circuits and heat. More particularly, the present invention pertains to a technique for preventing a capacity loss due to impact such as dropping.

### Background Art

Lithium secondary batteries have received attention as high-capacity power sources for portable and other appliances. Further, lithium secondary batteries have recently been receiving attention as high-output power sources for electric vehicles and the like. Chemical batteries such as lithium secondary batteries usually have a separator that electrically insulates a positive electrode from a negative electrode and holds an electrolyte. In the case of a lithium secondary battery, a micro-porous film made of polyolefin (e.g., polyethylene, polypropylene, etc.) is mainly used as the separator. The electrode assembly of a cylindrical lithium secondary battery is produced by winding the positive electrode and the negative electrode, with the separator interposed between the two electrodes, into a cylindrical shape. The electrode assembly has a predetermined cavity in the center thereof. In the manufacturing process of a battery, a non-aqueous electrolyte is injected into the central cavity of the electrode assembly in order to impregnate the electrode assembly with the non-aqueous electrolyte.

The electrodes of the electrode assembly expands or contracts during charge/discharge, and hence the electrode assembly tends to deform gradually. Thus, pressing the electrode assembly from the center thereof is proposed, in order to prevent the deformation of the electrode assembly (and the breakage of the electrodes caused by the deformation) (Patent Document 1). For the same purpose, a simple structure in which a hollow mandrel is inserted into the central cavity of the electrode assembly is also proposed (Patent Document 2). When a hollow mandrel is inserted into the central cavity, the mandrel is provided with a slit that extends along the entire length thereof. A non-aqueous electrolyte injected into the central cavity of the electrode assembly is introduced into the electrode assembly from the slit.

Meanwhile, when a lithium secondary battery is stored in an environment at extremely high temperatures for an extended period of time, its separator made of a micro-porous film tends to shrink. If the separator shrinks, then the positive electrode and the negative electrode may physically come into contact with each other to cause an internal short-circuit. In view of the recent tendency of separators becoming thinner with an increase in lithium secondary battery capacity, preventing an internal short-circuit becomes particularly important. Once an internal short-circuit occurs, the short-circuit may expand due to Joule's heat generated by the short-circuit current, thereby resulting in overheating of the battery.

Thus, in the event of an internal short-circuit, in order to suppress such expansion of the short-circuit, forming a porous heat-resistant layer that contains an inorganic filler (solid fine particles) and a binder on an electrode active material layer is proposed (Patent Document 3).
Alumina, silica, or the like is used as the inorganic filler. The inorganic filler is filled in the porous heat-resistant layer, and the filler particles are bonded to one another with a relatively small amount of a binder. Since the porous heat-resistant layer is resistant to shrinking even at high temperatures, it has the function of suppressing the overheating of the battery in the event of an internal short-circuit.
Patent Document 1: Japanese Laid-Open Patent Publication No. Hei 11-224689
Patent Document 2: Japanese Laid-Open Patent Publication No. 2003-317805
Patent Document 3: Japanese Laid-Open Patent Publication No. Hei 7-220759

### Disclosure of Invention

### Problem That the Invention Is to Solve

In order to realize an excellent lithium secondary battery, the proposal of Patent Document 1 or Patent Document 2 can be combined with the proposal of Patent Document 3.
This combination suppresses the deterioration of the electrode assembly and significantly reduces internal short-circuits, but may cause a significant capacity loss when the battery is subjected to an impact, for example, when dropped.

In view of the above problems, an object of the present invention is to provide a cylindrical lithium secondary battery that is excellent in resistance to short-circuits, is capable of preventing a capacity loss due to dropping, and has a good balance in battery characteristics.

### Means for Solving the Problem

The present invention relates to a cylindrical lithium secondary battery including: a cylindrical battery can having a bottom, a side wall, and an open top; an electrode assembly; a non-aqueous electrolyte; and a sealing plate covering the open top of the battery can that accommodates the electrode assembly and the non-aqueous electrolyte. The electrode assembly includes a strip-like positive electrode and a strip-like negative electrode that are wound together with a porous heat-resistant layer and a separator interposed between the positive and negative electrodes. The positive electrode comprises a positive electrode core member and a positive electrode active material layer carried on each side of the positive electrode core member. The negative electrode comprises a negative electrode core member and a negative electrode active material layer carried on each side of the negative electrode core member. The electrode assembly has a central cavity into which a hollow mandrel is inserted. The hollow mandrel has a slit that extends along the entire length thereof. The outer diameter A of the hollow mandrel and the width B of the slit satisfy the relation: 0.1≦B/A≦0.6.

In the cylindrical lithium secondary battery of the present invention, it is desirable that the thickness: C *µ*m of the porous heat-resistant layer satisfy the relation:
2≦C≦10 and that 0.2≦(C×B)/A≦3.5.

The porous heat-resistant layer is preferably carried on a surface of at least one of the two active material layers that are formed on both sides of the core member of at least one of the positive electrode and the negative electrode.

The porous heat-resistant layer preferably comprises an insulating filler.
The insulating filler preferably comprises an inorganic oxide.

### Effects of the Invention

The present invention makes it possible to provide a lithium secondary battery that is excellent in resistance to short-circuits and heat, is unlikely to suffer a capacity loss due to impact such as dropping, and has a good balance in battery characteristics.

### Brief Description of Drawings

FIG. 1 is a schematic sectional view of a part of a cylindrical lithium secondary battery in accordance with the present invention;
FIG. 2 is a perspective view of an exemplary hollow mandrel;
FIG. 3 is a cross-sectional view taken along the line III-III of FIG. 2; and
FIG. 4 is a longitudinal sectional view of a cylindrical lithium secondary battery in accordance with an example of the present invention.

### Best Mode for Carrying Out the Invention

The present invention is based on the following three findings.
First, an electrode assembly with a porous heat-resistant layer undergoes a smaller deformation during charge/discharge than a conventional electrode assembly without a porous heat-resistant layer. This is probably because the porous heat-resistant layer has a lower surface smoothness than the positive electrode, the negative electrode, and the separator and, therefore, the electrodes and the separator are unlikely to slip or be displaced.

Second, when an electrode assembly does not undergo a suitable deformation, the electrode assembly is unlikely to be firmly fixed in the battery can. Thus, if such a battery is dropped, the electrodes of the electrode assembly may be displaced, thereby resulting in a capacity loss. In order for the electrode assembly to be firmly fixed in the battery can, the electrode assembly needs to deform to a suitable extent. When the electrode assembly deforms to a suitable extent, the electrode assembly is pressed against the side wall of the battery can. As a result, a capacity loss due to impact such as dropping is unlikely to occur.

Third, when a hollow mandrel is inserted into the central cavity of the electrode assembly, the dimensions of the slit of the mandrel are correlated with the force of the mandrel which presses the electrode assembly. Also, the force of the mandrel which presses the electrode assembly is correlated with the force of the electrode assembly which presses the side wall of the battery can. Therefore, optimizing the dimensions of the slit enables the electrode assembly to press the side wall of the battery can to a suitable extent even when the electrode assembly has a porous heat-resistant layer and is thus resistant to deformation.
As a result, the safety can be improved by the porous heat-resistant layer without causing a capacity loss upon impact such as dropping, and it is possible to obtain a battery having a good balance in battery characteristics.

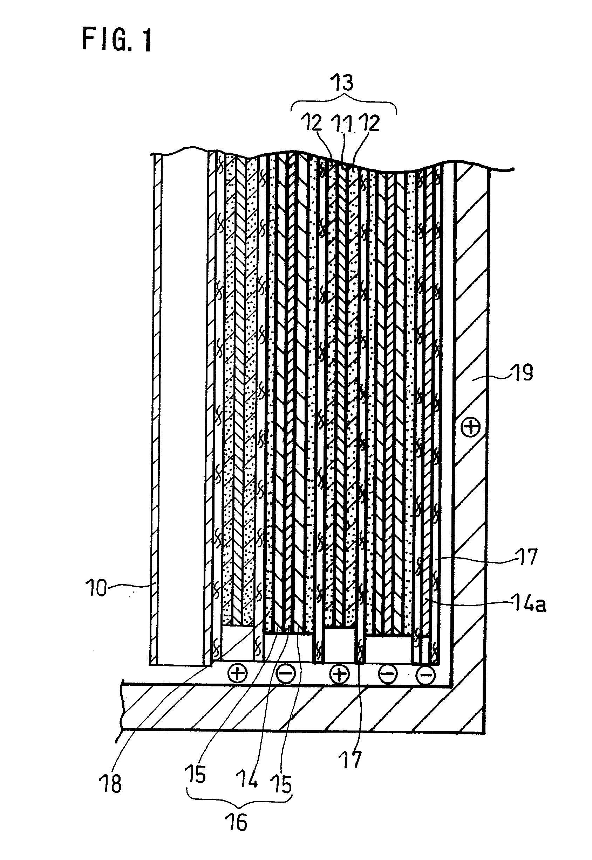

FIG. 1 is a schematic view of a part of a cylindrical lithium secondary battery in accordance with the present invention.
A positive electrode 13 has a strip-like positive electrode core member 11 and a positive electrode active material layer 12 carried on each side of the core member 11. A negative electrode 16 has a strip-like negative electrode core member 14 and a negative electrode active material layer 15 carried on each side of the core member 14. A porous heat-resistant layer 18 is carried on the surface of each negative electrode active material layer 15. The porous heat-resistant layer 18 has the function of preventing the expansion of an internal short-circuit. The positive electrode 13 and the negative electrode 16 are wound together with a strip-like separator 17 and the porous heat-resistant layer 18 interposed between the two electrodes, to form an electrode assembly. An exposed part 14a of the negative electrode core member is positioned in the outermost turn of the electrode assembly. The electrode assembly is housed in a cylindrical battery can 19. A hollow mandrel 10 is inserted into the central cavity of the electrode assembly.

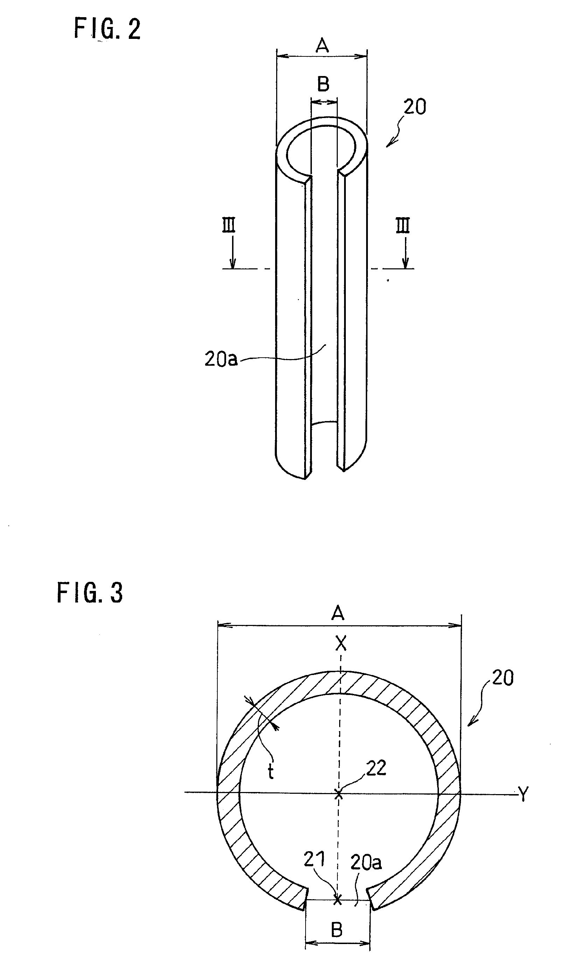

FIG. 2 is a perspective view of an exemplary hollow mandrel. A mandrel 20 has a slit 20a that extends along the entire length thereof. The slit 20a has the function of introducing a non-aqueous electrolyte that is held inside the mandrel 20 into the electrode assembly. FIG. 3 is a cross-sectional view of the mandrel 20 taken along the line III-III of FIG. 2. The mandrel 20 has a substantially circular ringshaped cross-section.

When the outer diameter A of the mandrel 20 and the width B of the slit satisfy the relation: 0.1≦B/A≦0.6, the function of the slit 20a of introducing the non-aqueous electrolyte into the electrode assembly (first function) and the function of the mandrel 20 of pressing the electrode assembly outward (second function) are exhibited in a well-balanced manner. Hence, even in the case of using an electrode assembly that is resistant to deformation, the electrode assembly is pressed against the side wall of the battery can to a suitable extent. Also, when the B/A ratio satisfies the relation: 0.15≦B/A≦0.5, the first function and the second function are exhibited in a better balanced manner.

When the cross-section of the mandrel 20 is not completely circular, the outer diameter A is obtained as follows.
First, in the cross-section of the mandrel 20, a straight line X passing through a center 21 of the slit and a center of gravity 22 of the mandrel 20 is obtained. Then, a straight line Y that is perpendicular to the straight line X, is parallel with the cross-section of the mandrel 20, and passes through the center of gravity 22 of the mandrel 20 is obtained. The outer diameter of the mandrel 20 measured along the straight line Y is defined as the outer diameter A. Also, when the width B of the slit on the inner side of the mandrel is different from the width B of the slit on the outer side thereof, the average of the width on the inner side and the width on the outer side is defined as the width B.

When 0.6<B/A, i.e., the width B of the slit is too large relative to the outer diameter A, the force of the mandrel 20 which presses the electrode assembly acts only partially, thereby resulting in a significant capacity loss upon impact such as dropping. On the other hand, when B/A<0.1, i.e., the width B of the slit is too small relative to the outer diameter A, the function of the silt of introducing the non-aqueous electrolyte into the electrode assembly deteriorates. Thus, the permeation of the non-aqueous electrolyte into the electrode assembly becomes insufficient and the initial battery capacity lowers. That is, the higher the B/A ratio (the wider the slit), the less the mandrel presses the electrode assembly. On the other hand, the lower the B/A ratio (the narrower the slit), the more difficult the permeation of the non-aqueous electrolyte into the electrode assembly becomes.

Although the material of the hollow mandrel is not particularly limited, for example, stainless steel or iron is preferable in view of the strength and chemical stability in the battery operating environment. The thickness of the material of the hollow mandrel is preferably in the range of 0.05 to 1 mm, more preferably 0.1 to 0.5 mm, in view of both the strength and the workability. It should be noted, however, that the preferable thickness of the material varies depending on the kind of the material.

The outer diameter A of the mandrel can be appropriately selected according to the battery design. For example, in the case of consumer lithium secondary batteries for use in portable appliances, etc., the outer diameter A of the mandrel is generally 1 to 3 mm.

However, the outer diameter of the mandrel is preferably smaller than the initial diameter of the central cavity of the electrode assembly by about 0.5 to 2 mm. If this difference is less than 0.5 mm, it becomes difficult to insert the hollow mandrel into the cavity, thereby resulting in a decrease in production yields. On the other hand, if this difference exceeds 2 mm, the force of the mandrel which presses the electrode assembly decreases, which may result in a significant capacity loss upon impact such as dropping. The diameter of the central cavity of the electrode assembly changes as the battery is repeatedly charged and discharged.

The thickness of the porous heat-resistant layer is preferably 0.5 to 20 *µ*m, more preferably 1 to 10 *µ*m, still more preferably 2 to 10 *µ*m, and most preferably 2 to 6 *µ*m. The porous heat-resistant layer has the function of holding the non-aqueous electrolyte (electrolyte retention). If the porous heat-resistant layer is too thin, the electrolyte retention may deteriorate, resulting in a degradation of discharge characteristics (particularly high-rate discharge characteristics). On the other hand, if the porous heat-resistant layer is too thick, it has good electrolyte retention, but it becomes brittle. Hence, upon impact such as dropping, the electrodes of the electrode assembly may be displaced.

When the thickness of the porous heat-resistant layer is represented by C *µ*m, the outer diameter A of the hollow mandrel, the width B of the slit, and the thickness C of the porous heat-resistant layer desirably satisfy the relation: 0.2≦(C×B)/A≦3.5, and more desirably 0.5≦(C×B)/A≦3.0. If (C×B)/A<0.2, the porous heat-resistant layer is thin and the width B of the slit of the mandrel is also small. Thus, the permeation of the non-aqueous electrolyte into the electrodes may deteriorate. On the other hand, if 3.5<(C×B)/A, the porous heat-resistant layer is thick and brittle and the width B of the slit of the mandrel also becomes large. Thus, due to impact such as dropping, the electrodes of the electrode assembly may be displaced.

When 0.2≦(C×B)/A≦3.5, even if the porous heat-resistant layer is thin, the B/A ratio is relatively high. Thus, even if the porous heat-resistant layer has poor electrolyte retention, the permeation of the non-aqueous electrolyte into the electrodes is favorable. Also, a thin porous heat-resistant layer is relatively durable. Thus, even if the B/A ratio is relatively high and the force of the hollow mandrel which presses the electrode assembly is small, the battery is unlikely to suffer a capacity loss due to impact.

Also, when 0.2≦(C×B)/A≦3.5, even if the porous heat-resistant layer is thick, the B/A ratio is relatively low. Thus, the force of the hollow mandrel which presses the electrode assembly is relatively large, and even if the porous heat-resistant layer is brittle, the battery is unlikely to suffer a capacity loss due to impact. Further, a thick porous heat-resistant layer has good electrolyte retention. Hence, even if the width of the slit is reduced, good discharge characteristics are maintained.

The porous heat-resistant layer may be formed on only the surface of the positive electrode active material layer or only the surface of the negative electrode active material layer. Alternatively, it may be formed on the surface of the positive electrode active material layer and the surface of the negative electrode active material layer. However, in order to avoid an internal short-circuit in a reliable manner, the porous heat-resistant layer is desirably formed on the surface of the negative electrode active material layer that is designed to have a larger area than that of the positive electrode active material layer. Also, the porous heat-resistant layer may be formed on the active material layer on one side of the core member or may be formed on the active material layers on both sides of the core member. Further, the porous heat-resistant layer is desirably adhered to the surface of the active material layer.

The porous heat-resistant layer may be in the form of an independent sheet. However, since the porous heat-resistant layer in sheet form does not have a high mechanical strength, it may be difficult to handle. Also, the porous heat-resistant layer may be attached to the surface of the separator. However, since the separator shrinks at high temperatures, close attention must be given to manufacturing conditions of the porous heat-resistant layer. In terms of eliminating such concern, it is also desirable that the porous heat-resistant layer be formed on the surface of the positive electrode active material layer or the surface of the negative electrode active material layer.

The porous heat-resistant layer preferably contains an insulating filler and a binder. Such a porous heat-resistant layer is formed by applying a raw material paste, containing an insulating filler and a small amount of a binder, onto the surface of the electrode active material layer or separator with a doctor blade or a die coater and drying it. The raw material paste is prepared by mixing an insulating filler, a binder, and a liquid component, for example, with a double-arm kneader.

Also, the porous heat-resistant layer may be a film formed of fibers of a highly heat-resistant resin. The highly heat-resistant resin is preferably aramid, polyamide imide, etc. However, the porous heat-resistant layer comprising an insulating filler and a binder has a higher structural strength, due to the action of the binder, than the film formed of fibers of a highly heat-resistant resin and is preferable.

The insulating filler may comprise fibers or beads of the highly heat-resistant resin, but it preferably comprises an inorganic oxide. Since inorganic oxides are hard, they can maintain the distance between the positive electrode and the negative electrode in an appropriate range even if the electrode expands due to charge/discharge. Among inorganic oxides, for example, alumina, silica, magnesia, titania, and zirconia are particularly preferable, because they are electrochemically highly stable in the operating environment of lithium secondary batteries. They may be used singly or in combination of two or more of them.

In the porous heat-resistant layer comprising such an insulating filler and a binder, the amount of the binder is preferably 1 to 10 parts by weight, more preferably 2 to 8 parts by weight, per 100 parts by weight of the insulating filler, in order to maintain its mechanical strength and its ionic conductivity. Most binders and thickeners inherently swell with a non-aqueous electrolyte. Thus, if the amount of the binder exceeds 10 parts by weight, the binder swells excessively to close the pores of the porous heat-resistant layer, so that the ionic conductivity may lower and the battery reaction may be impeded. On the other hand, if the amount of the binder is less than 1 part by weight, the mechanical strength of the porous heat-resistant layer may degrade.

The binder used in the porous heat-resistant layer is not particularly limited, but polyvinylidene fluoride (hereinafter referred to as PVDF), polytetrafluoroethylene (hereinafter referred to as PTFE), and polyacrylic acid-type rubber particles (e.g., BM-500B (trade name) available from Zeon Corporation), for example, are preferred. It is preferred to use PTFE or BM-500B in combination with a thickener. The thickener is not particularly limited, but carboxymethyl cellulose (hereinafter referred to as CMC), polyethylene oxide (hereinafter referred to as PEO), and modified acrylonitrile rubber (e.g., BM-720H (trade name) available from Zeon Corporation), for example, are preferred.

The porosity of the porous heat-resistant layer comprising the insulating filler and the binder is preferably 40 to 80 %, more preferably 45 to 65 %, in order to maintain its mechanical strength and improve its resistance to dropping. The porous heat-resistant layer has a lower surface smoothness than the positive electrode, the negative electrode, and the separator, so slipping (displacement) of the electrodes and the separator is excessively suppressed. Hence, the electrode assembly tends to be displaced. However, when the porous heat-resistant layer with a porosity of 40 to 80 % is impregnated with a suitable amount of electrolyte, the electrode assembly swells to a suitable extent. As a result, the swollen electrode assembly presses the side wall of the battery can. When this effect obtained from the porosity of 40 to 80 % is synergistically combined with the effect of optimization of the B/A ratio, the resistance to dropping is further enhanced.

It should be noted that the porosity of the porous heat-resistant layer can be controlled by changing the median diameter of the insulating filler, the amount of the binder, and the drying conditions of the raw material paste. For example, increasing the drying temperature or the flow rate of hot air for the drying results in a relative increase in porosity. The porosity can be calculated from, for example, the thickness of the porous heat-resistant layer, the amounts of the insulating filler and the binder, and the true specific gravities of the insulating filler and the binder. The thickness of the porous heat-resistant layer can be determined by taking an SEM photo of several cross-sections (for example, 10 cross-sections) of an electrode and averaging the thicknesses in the several cross-sections. Also, the porosity can be determined with a mercury porosimeter.

The separator comprises, for example, a micro-porous film. The separator may be provided between the porous heat-resistant layer and the positive electrode or between the porous heat-resistant layer and the negative electrode. The material of the micro-porous film is preferably polyolefin, and the polyolefin is preferably polyethylene, polypropylene, or the like. A micro-porous film comprising both polyethylene and polypropylene may also be used. The thickness of the micro-porous film is preferably 8 to 20 *µ*m in terms of maintaining a high capacity design.

The positive electrode includes a positive electrode core member and a positive electrode active material layer carried on each side thereof. The positive electrode core member is in the form of a strip suitable for winding and comprises Al, an Al alloy, or the like. The positive electrode active material layer contains a positive electrode active material as an essential component and may contain optional components such as a conductive agent and a binder. These materials are not particularly limited, but a preferable positive electrode active material is a lithium-containing transition metal oxide. Among lithium-containing transition metal oxides, lithium cobaltate, modified lithium cobaltate, lithium nickelate, modified lithium nickelate, lithium manganate and modified lithium manganate are preferred, for example.

The negative electrode includes a negative electrode core member and a negative electrode active material layer carried on each side thereof. The negative electrode core member is in the form of a strip suitable for winding and comprises Cu, a Cu alloy, or the like. The negative electrode active material layer contains a negative electrode active material as an essential component and may contain optional components such as a conductive agent and a binder. These materials are not particularly limited, but preferable negative electrode active materials include various natural graphites, various artificial graphites, silicon-containing composite materials such as silicide, lithium metal, and various alloy materials.

Exemplary binders for the positive or negative electrode include PTFE, PVDF, and styrene butadiene rubber. Exemplary conductive agents include acetylene black, ketjen black (registered trademark), and various graphites.

The non-aqueous electrolyte preferably comprises a non-aqueous solvent dissolving a lithium salt. The lithium salt is not particularly limited, but for example, LiPF₆ and LiBF₄ are preferred. Such lithium salts may be used singly or in combination of two or more of them. The non-aqueous solvent is not particularly limited, but preferable examples include ethylene carbonate (EC), dimethyl carbonate (DMC), diethyl carbonate (DEC), and ethyl methyl carbonate (EMC). Such non-aqueous solvents may be used singly or in combination of two or more of them.

The material of the battery can must be electrochemically stable in the operating voltage range of lithium secondary batteries. For example, iron is preferably used. Also, the battery can may be plated with nickel or tin.
The present invention is hereinafter described more specifically by way of Examples and Comparative Examples.

### Examples

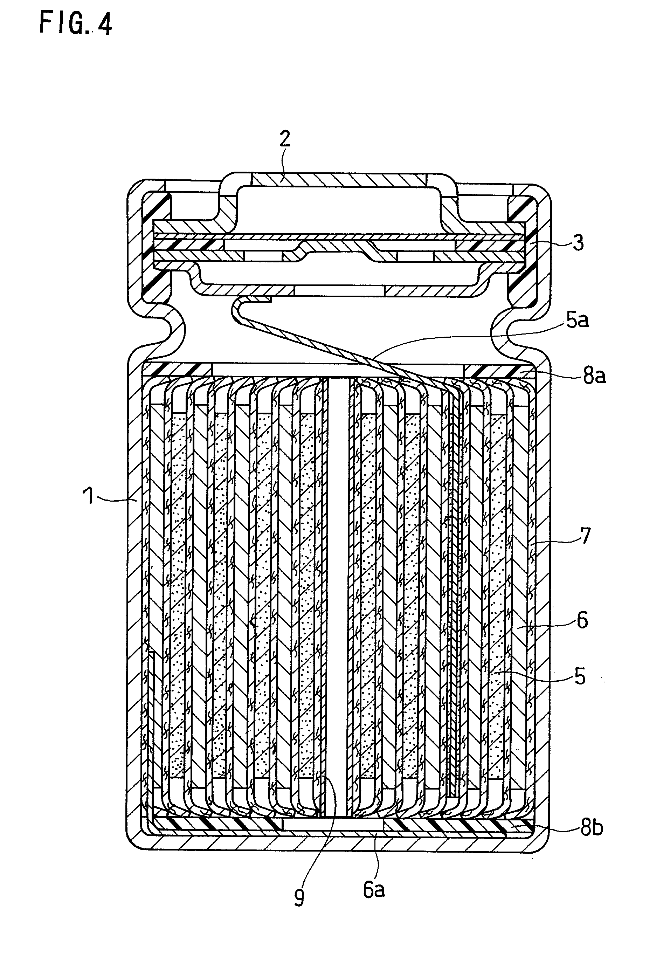

In this example, a cylindrical lithium secondary battery as illustrated in FIG. 4 is described.

### (Battery 1)

### (i) Preparation of positive electrode

A positive electrode mixture paste was prepared by stirring 3 kg of lithium cobaltate, 1 kg of PVDF#1320 available from KUREHA CORPORATION (N-methyl-2-pyrrolidone (hereinafter referred to as NMP) solution containing 12% by weight of PVDF), 90 g of acetylene black, and a suitable amount of NMP with a double-arm kneader. This paste was applied onto both sides of a positive electrode core member comprising a 15-*µ*m-thick aluminum foil, dried, and rolled, to form a positive electrode with positive electrode active material layers. This positive electrode had a total thickness of 160 *µ*m. The positive electrode was cut to a strip with a width of 56 mm.

### (ii) Preparation of negative electrode

A negative electrode mixture paste was prepared by stirring 3 kg of artificial graphite, 75 g of BM-400B available from Zeon Corporation (aqueous dispersion containing 40% by weight of modified styrene butadiene rubber), 30 g of carboxyl methyl cellulose (CMC), and a suitable amount of water with a double-arm kneader. This paste was applied onto both sides of a negative electrode core member comprising a 10-*µ*m-thick copper foil, dried, and rolled to form a negative electrode with negative electrode active material layers. This negative electrode had a total thickness of 180 *µ*m. The negative electrode was cut to a strip with a width of 57 mm.

### (iii) Formation of porous heat-resistant layer

A raw material paste was prepared by stirring 970 g of alumina with a median diameter of 0.3 *µ*m (insulating filler), 375 g of BM-720H available from Zeon Corporation (NMP solution containing 8% by weight of modified polyacrylonitrile rubber (binder)), and a suitable amount of NMP with a double-arm kneader. This raw material paste was applied onto the surfaces of the negative electrode active material layers and dried under reduced pressure at 120°C for 10 hours, to form 5-µm-thick porous heat-resistant layers. The porosity of each porous heat-resistant layer was 48%. The porosity was calculated from: the thickness of the porous heat-resistant layer determined by taking an SEM photo of a cross-section thereof; the amount of alumina in the porous heat-resistant layer of a given area obtained by X-ray fluorescence analysis; the true specific gravities of alumina and the binder; and the weight ratio between alumina and the binder.

### (iv) Preparation of non-aqueous electrolyte

LiPF₆ was dissolved at a concentration of 1 mol/liter in a solvent mixture of ethylene carbonate (EC), dimethyl carbonate (DMC), and ethyl methyl carbonate (EMC) in a volume ratio of 1:1:1, and this solution was mixed with 3% by weight of vinylene carbonate, to prepare a non-aqueous electrolyte.

### (v) Battery assembly

An explanation is made with reference to FIG. 4. A cylindrical electrode assembly was fabricated by winding a positive electrode 5 and a negative electrode 6 with porous heat-resistant layers (not shown) on both sides thereof, with a separator 7 comprising a 20-*µ*m-thick polyethylene micro-porous film (A089 (trade name) available from Celgard K. K.) interposed therebetween. The electrode assembly was inserted into an iron cylindrical battery can 1 (inner diameter: 18 mm) plated with nickel. Insulator plates 8a and 8b were provided on top of and under the electrode assembly, respectively. One end of a positive electrode lead 5a was connected to the positive electrode 5, and the other end was welded to the lower face of a sealing plate 2 equipped with a safety valve. One end of a negative electrode lead 6a was connected to the negative electrode 6, and the other end was connected to the inner bottom face of the battery can 1.

Thereafter, a hollow mandrel 9 was inserted into the central cavity of the electrode assembly (initial diameter 4 mm). The mandrel 9 used was prepared by cutting a 0.2-mm-thick cold-rolled stainless steel plate (SUS304-CS) to a width of 58 mm and working it into a substantially cylindrical shape. The outer diameter A of the mandrel 9 was 3.0 mm, and the width B of the slit was 0.1 mm. Thus, B/A=0.03, and (C×B)/A=0.17.

The non-aqueous electrolyte of 5.5 g was injected into the hollow of the mandrel 9 to impregnate the electrode assembly with the non-aqueous electrolyte. Subsequently, the sealing plate 2 was fitted to the open top of the battery can 1, and the open edge of the battery can 1 was crimped onto the circumference of the sealing plate 2. This completed a cylindrical lithium secondary battery with an inner diameter of 18 mm, a height of 65 mm, and a design capacity of 2000 mAh.

### (Batteries 2 to 7)

Battery 2 (B/A=0.1, (C×B)/A=0.5), battery 3 (B/A=0.17, (C×B)/A=0.83), battery 4 (B/A=0.27, (C×B)/A=1.33), battery 5 (B/A=0.47, (C×B)/A=2.33), battery 6 (B/A=0.6, (C×B)/A=3), and battery 7 (B/A=0.73, (C×B)/A=3.67) were produced in the same manner as the battery 1, except that the width B of the slit of the mandrel 9 was changed to 0.3 mm, 0.5 mm, 0.8 mm, 1.4 mm, 1.8 mm, and 2.2 mm, respectively.

### (Batteries 8 to 14)

Battery 8 (B/A=0.03, (C × B)/A=0.02), battery 9 (B/A=0.1, (C × B)/A=0.05), battery 10 (B/A=0.17, (C×B)/A=0.08), battery 11 (B/A=0.27, (C×B)/A=0.13), battery 12 (B/A=0.47, (C×B)/A=0.23), battery 13 (B/A=0.6, (C×B)/A=0.3), and battery 14 (B/A=0.73, (C×B)/A=0.37) were produced in the same manner as the batteries 1, 2, 3, 4, 5, 6, and 7, respectively, except that the thickness of the porous heat-resistant layer was changed to 0.5 *µ*m.

### (Batteries 15 to 21)

Battery 15 (B/A=0.03, (C × B)/A=0.03), battery 16 (B/A=0.1, (C × B)/A=0.1), battery 17 (B/A=0.17, (C × B)/A=0.17), battery 18 (B/A=0.27, (C×B)/A=0.27), battery 19 (B/A=0.47, (CXB)/A=0.47), battery 20 (B/A=0.6, (C×B)/A=0.6), and battery 21 (B/A=0.73, (C × B)/A=0.73) were produced in the same manner as the batteries 1, 2, 3, 4, 5, 6, and 7, respectively, except that the thickness of the porous heat-resistant layer was changed to 1 *µ*m.

### (Batteries 22 to 28)

Battery 22 (B/A=0.03, (C×B)/A=0.07), battery 23 (B/A=0.1, (C×B)/A=0.2), battery 24 (B/A=0.17, (C×B)/A=0.33), battery 25 (B/A=0.27, (C×B)/A=0.53), battery 26 (B/A=0.47, (C×B)/A=0.93), battery 27 (B/A=0.6, (C×B)/A=1.2) and battery 28 (B/A=0.73, (C×B)/A=1.47) were produced in the same manner as the batteries 1, 2, 3, 4, 5, 6, and 7, except that the thickness of the porous heat-resistant layer was changed to 2 *µ*m.

### (Batteries 29 to 35)

Battery 29 (B/A=0.03, (C×B)/A=0.23), battery 30 (B/A=0.1, (C×B)/A=0.7), battery 31 (B/A=0.17, (C×B)/A=1.17), battery 32 (B/A=0.27, (C×B)/A=1.87), battery 33 (B/A=0.47, (C×B)/A=3.27), battery 34 (B/A=0.6, (C×B)/A=4.2) and battery 35 (B/A=0.73, (C×B)/A=5.13) were produced in the same manner as the batteries 1, 2, 3, 4, 5, 6, and 7, except that the thickness of the porous heat-resistant layer was changed to 7 µm.

### (Batteries 36 to 41)

Battery 36 (B/A=0.03, (C×B)/A=0.33), battery 37 (B/A=0.1, (C×B)/A=1), battery 38 (B/A=0.27, (C×B)/A=2.67), battery 39 (B/A=0.47, (C×B)/A=4.67), battery 40 (B/A=0.6, (C×B)/A=6), and battery 41 (B/A=0.73, (C×B)/A=7.33) were produced in the same manner as the batteries 1, 2, 4, 5, 6, and 7, respectively, except that the thickness of the porous heat-resistant layer was changed to 10 *µ*m.

### (Batteries 42 to 47)

Battery 42 (B/A=0.03, (CXB)/A=0.67), battery 43 (B/A=0.1, (CXB)/A=2), battery 44 (B/A=0.27, (CXB)/A=5.33), battery 45 (B/A=0.47, (CXB)/A=9.33), battery 46 (B/A=0.6, (CXB)/A=12), and battery 47 (B/A=0.73, (CXB)/A=14.67) were produced in the same manner as the batteries 1, 2, 4, 5, 6, and 7, respectively, except that the thickness of the porous heat-resistant layer was changed to 20 µm.

### (Batteries 48 to 54)

Battery 48 (B/A=0.03, (C×B)/A=0), battery 49 (B/A=0.1, (C×B)/A=0), battery 50 (B/A=0.17, (C×B)/A=0), battery 51 (B/A=0.27, (CXB)/A=0), battery 52 (B/A=0.47, (CXB)/A=0), battery 53 (B/A=0.6, (CXB)/A=0), and battery 54 (B/A=0.73, (CXB)/A=0) were produced in the same manner as the batteries 1, 2, 3, 4, 5, 6, and 7, except that no porous heat-resistant layer was provided.
Table 1 summarizes the features of the respective batteries.

**Table 1**

| Battery | Hollow mandrel | | Porous heat-resistant layer | | B/A | C×B/A |
|---|---|---|---|---|---|---|
| | Outer diameter A (mm) | Slit width B (mm) | Presence/ absence | Thickness C (µm) | | |
| 1 | 3.0 | 0.1 | Present | 5 | 0.03 | 0.17 |
| 2 | 3.0 | 0.3 | Present | 5 | 0.10 | 0.50 |
| 3 | 3.0 | 0.5 | Present | 5 | 0.17 | 0.83 |
| 4 | 3.0 | 0.8 | Present | 5 | 0.27 | 1.33 |
| 5 | 3.0 | 1.4 | Present | 5 | 0.47 | 2.33 |
| 6 | 3.0 | 1.8 | Present | 5 | 0.60 | 3.00 |
| 7 | 3.0 | 2.2 | Present | 5 | 0.73 | 3.67 |
| 8 | 3.0 | 0.1 | Present | 0.5 | 0.03 | 0.02 |
| 9 | 3.0 | 0.3 | Present | 0.5 | 0.10 | 0.05 |
| 10 | 3.0 | 0.5 | Present | 0.5 | 0.17 | 0.08 |
| 11 | 3.0 | 0.8 | Present | 0.5 | 0.27 | 0.13 |
| 12 | 3.0 | 1.4 | Present | 0.5 | 0.47 | 0.23 |
| 13 | 3.0 | 1.8 | Present | 0.5 | 0.60 | 0.30 |
| 14 | 3.0 | 2.2 | Present | 0.5 | 0.73 | 0.37 |
| 15 | 3.0 | 0.1 | Present | 1 | 0.03 | 0.03 |
| 16 | 3.0 | 0.3 | Present | 1 | 0.10 | 0.10 |
| 17 | 3.0 | 0.5 | Present | 1 | 0.17 | 0.17 |
| 18 | 3.0 | 0.8 | Present | 1 | 0.27 | 0.27 |
| 19 | 3.0 | 1.4 | Present | 1 | 0.47 | 0.47 |
| 20 | 3.0 | 1.8 | Present | 1 | 0.60 | 0.60 |
| 21 | 3.0 | 2.2 | Present | 1 | 0.73 | 0.73 |
| 22 | 3.0 | 0.1 | Present | 2 | 0.03 | 0.07 |
| 23 | 3.0 | 0.3 | Present | 2 | 0.10 | 0.20 |
| 24 | 3.0 | 0.5 | Present | 2 | 0.17 | 0.33 |
| 25 | 3.0 | 0.8 | Present | 2 | 0.27 | 0.53 |
| 26 | 3.0 | 1.4 | Present | 2 | 0.47 | 0.93 |
| 27 | 3.0 | 1.8 | Present | 2 | 0.60 | 1.20 |
| 28 | 3.0 | 2.2 | Present | 2 | 0.73 | 1.47 |
| 29 | 3.0 | 0.1 | Present | 7 | 0.03 | 0.23 |
| 30 | 3.0 | 0.3 | Present | 7 | 0.10 | 0.70 |
| 31 | 3.0 | 0.5 | Present | 7 | 0.17 | 1.17 |
| 32 | 3.0 | 0.8 | Present | 7 | 0.27 | 1.87 |
| 33 | 3.0 | 1.4 | Present | 7 | 0.47 | 3.27 |
| 34 | 3.0 | 1.8 | Present | 7 | 0.60 | 4.20 |
| 35 | 3.0 | 2.2 | Present | 7 | 0.73 | 5.13 |
| 36 | 3.0 | 0.1 | Present | 10 | 0.03 | 0.33 |
| 37 | 3.0 | 0.3 | Present | 10 | 0.10 | 1.00 |
| 38 | 3.0 | 0.8 | Present | 10 | 0.27 | 2.67 |
| 39 | 3.0 | 1.4 | Present | 10 | 0.47 | 4.67 |
| 40 | 3.0 | 1.8 | Present | 10 | 0.60 | 6.00 |
| 41 | 3.0 | 2.2 | Present | 10 | 0.73 | 7.33 |
| 42 | 3.0 | 0.1 | Present | 20 | 0.03 | 0.67 |
| 43 | 3.0 | 0.3 | Present | 20 | 0.10 | 2.00 |
| 44 | 3.0 | 0.8 | Present | 20 | 0.27 | 5.33 |
| 45 | 3.0 | 1.4 | Present | 20 | 0.47 | 9.33 |
| 46 | 3.0 | 1.8 | Present | 20 | 0.60 | 12.00 |
| 47 | 3.0 | 2.2 | Present | 20 | 0.73 | 14.67 |
| 48 | 3.0 | 0.1 | Absent | 0 | 0.03 | 0.00 |
| 49 | 3.0 | 0.3 | Absent | 0 | 0.10 | 0.00 |
| 50 | 3.0 | 0.5 | Absent | 0 | 0.17 | 0.00 |
| 51 | 3.0 | 0.8 | Absent | 0 | 0.27 | 0.00 |
| 52 | 3.0 | 1.4 | Absent | 0 | 0.47 | 0.00 |
| 53 | 3.0 | 1.8 | Absent | 0 | 0.60 | 0.00 |
| 54 | 3.0 | 2.2 | Absent | 0 | 0.73 | 0.00 |

### [Evaluation]

The respective batteries were preliminarily charged and discharged twice and then stored in an environment at 45°C for 7 days. Thereafter, they were evaluated in the following manner.

### (Initial battery capacity (1C))

The batteries were charged and discharged in an environment at 20°C under the following conditions, and their initial discharge capacities (1C) were obtained.
Constant current charge: charge current 1400 mA / end of charge voltage 4.2 V
Constant voltage charge: charge voltage 4.2 V / end of charge current 100 mA
Constant current discharge: discharge current 2000 mA / end of discharge voltage 3 V

### (Initial battery capacity (2C))

The batteries were charged and discharged in the 20°C environment under the following conditions, and their initial discharge capacities (2C) were obtained.
Constant current charge: charge current 1400 mA / end of charge voltage 4.2 V
Constant voltage charge: charge voltage 4.2 V / end of charge current 100 mA
Constant current discharge: discharge current 4000 mA / end of discharge voltage 3 V

### (16 cm drop test)

After the measurement of the initial capacity, the batteries were charged in the 20°C environment under the following conditions.
Constant current charge: charge current 1400 mA / end of charge voltage 4.2 V
Constant voltage charge: charge voltage 4.2 V / end of charge current 100 mA
The charged batteries were dropped from a height of 16 cm 30 times in the 20°C environment. Thereafter, they were discharged under the following conditions and their discharge capacities (1C) after the dropping were obtained.
Constant current discharge: discharge current 2000 mA / end of discharge voltage 3 V
Also, the percentage of the discharge capacity (1C) after dropping relative to the initial discharge capacity (1C) was obtained and defined as a drop resistance.

### (1 m drop test)

A drop test was conducted in the same manner as the 16 cm drop test to obtain the discharge capacity (1C) after dropping, except that the batteries were dropped from a height of 1 m. Also, the percentage of the discharge capacity (1C) after dropping relative to the initial discharge capacity (1C) was obtained and defined as a drop resistance.

### (Nail penetration test)

The respective batteries were charged at a charge current of 2000 mA to a cut-off voltage of 4.35 V. In the 20°C environment, a 2.7-mm-diameter iron nail was driven into the side wall of each charged battery at a speed of 5 mm/sec, and the battery temperature was measured with a thermocouple fitted to the side wall of the battery. The temperature after 90 seconds was measured.
Table 2 shows the evaluation results.

**Table 2**

| Battery | Initial battery capacity (mAh) | | 16 cm drop test | | 1 m drop test | | Nail penetration test |
|---|---|---|---|---|---|---|---|
| | 1C | 2C | Battery capacity after dropping (mAh) | Drop resistance (%) | Battery capacity after dropping (mAh) | Drop resistance (%) | Battery temperature after 90 sec (°C) |
| 1 | 2122 | 1889 | 2118 | 99.8 | 2107 | 99.3 | 87 |
| 2 | 2172 | 2023 | 2169 | 99.9 | 2160 | 99.4 | 88 |
| 3 | 2192 | 2048 | 2189 | 99.9 | 2188 | 99.8 | 88 |
| 4 | 2197 | 2050 | 2194 | 99.9 | 2185 | 99.5 | 86 |
| 5 | 2202 | 2078 | 2196 | 99.7 | 2194 | 99.6 | 88 |
| 6 | 2201 | 2069 | 2175 | 98.8 | 2180 | 99.0 | 89 |
| 7 | 2202 | 2076 | 2075 | 94.2 | 1930 | 87.6 | 87 |
| 8 | 2099 | 1895 | 2130 | 101.5 | 2122 | 101.1 | 93 |
| 9 | 2168 | 1944 | 2158 | 99.5 | 2148 | 99.1 | 95 |
| 10 | 2180 | 1952 | 2174 | 99.7 | 2170 | 99.5 | 94 |
| 11 | 2186 | 1955 | 2186 | 100.0 | 2183 | 99.9 | 94 |
| 12 | 2200 | 1953 | 2190 | 99.5 | 2180 | 99.1 | 94 |
| 13 | 2199 | 1950 | 2192 | 99.7 | 2186 | 99.4 | 96 |
| 14 | 2190 | 1950 | 2038 | 93.1 | 1922 | 87.8 | 93 |
| 15 | 2103 | 1900 | 2098 | 99.8 | 2094 | 99.6 | 93 |
| 16 | 2179 | 1963 | 2172 | 99.7 | 2166 | 99.4 | 94 |
| 17 | 2188 | 1970 | 2186 | 99.9 | 2185 | 99.9 | 95 |
| 18 | 2198 | 1972 | 2192 | 99.7 | 2183 | 99.3 | 93 |
| 19 | 2196 | 1970 | 2192 | 99.8 | 2190 | 99.7 | 92 |
| 20 | 2200 | 1968 | 2196 | 99.8 | 2185 | 99.3 | 95 |
| 21 | 2198 | 1968 | 2046 | 93.1 | 1926 | 87.6 | 94 |
| 22 | 2110 | 1901 | 2108 | 99.9 | 2100 | 99.5 | 89 |
| 23 | 2190 | 2051 | 2188 | 99.9 | 2185 | 99.8 | 87 |
| 24 | 2193 | 2055 | 2190 | 99.9 | 2183 | 99.5 | 84 |
| 25 | 2199 | 2080 | 2194 | 99.8 | 2190 | 99.6 | 86 |
| 26 | 2195 | 2076 | 2192 | 99.9 | 2186 | 99.6 | 86 |
| 27 | 2201 | 2077 | 2200 | 100.0 | 2196 | 99.8 | 89 |
| 28 | 2200 | 2070 | 2051 | 93.2 | 1952 | 88.7 | 88 |
| 29 | 2130 | 1913 | 2128 | 99.9 | 2120 | 99.5 | 86 |
| 30 | 2192 | 2073 | 2186 | 99.7 | 2180 | 99.5 | 85 |
| 31 | 2199 | 2075 | 2192 | 99.7 | 2187 | 99.5 | 84 |
| 32 | 2202 | 2073 | 2196 | 99.7 | 2193 | 99.6 | 86 |
| 33 | 2205 | 2075 | 2201 | 99.8 | 2191 | 99.4 | 87 |
| 34 | 2198 | 2072 | 2195 | 99.9 | 2076 | 94.4 | 86 |
| 35 | 2199 | 2069 | 2080 | 94.6 | 1960 | 89.1 | 83 |
| 36 | 2140 | 1910 | 2133 | 99.7 | 2127 | 99.4 | 88 |
| 37 | 2195 | 2070 | 2190 | 99.8 | 2085 | 95.0 | 85 |
| 38 | 2201 | 2064 | 2197 | 99.8 | 2192 | 99.6 | 85 |
| 39 | 2197 | 2069 | 2194 | 99.9 | 2080 | 94.7 | 87 |
| 40 | 2198 | 2072 | 2196 | 99.9 | 2073 | 94.3 | 83 |
| 41 | 2196 | 2076 | 2078 | 94.6 | 1958 | 89.2 | 86 |
| 42 | 2141 | 1916 | 2138 | 99.9 | 2020 | 94.3 | 82 |
| 43 | 2200 | 2069 | 2197 | 99.9 | 2100 | 95.5 | 82 |
| 44 | 2199 | 2072 | 2192 | 99.7 | 2087 | 94.9 | 86 |
| 45 | 2197 | 2074 | 2196 | 100.0 | 2070 | 94.2 | 84 |
| 46 | 2203 | 2080 | 2200 | 99.9 | 2074 | 94.1 | 86 |
| 47 | 2200 | 2078 | 2059 | 93.6 | 1934 | 87.9 | 83 |
| 48 | 2111 | 1900 | 2109 | 99.9 | 2100 | 99.5 | 131 |
| 49 | 2148 | 1950 | 2144 | 99.8 | 2140 | 99.6 | 135 |
| 50 | 2161 | 1970 | 2159 | 99.9 | 2154 | 99.7 | 133 |
| 51 | 2179 | 1968 | 2175 | 99.8 | 2170 | 99.6 | 133 |
| 52 | 2197 | 1962 | 2192 | 99.8 | 2190 | 99.7 | 133 |
| 53 | 2199 | 1955 | 2193 | 99.7 | 2190 | 99.6 | 129 |
| 54 | 2204 | 1960 | 2192 | 99.5 | 1970 | 89.4 | 134 |

In the case of the battery 1 where the slit width B is too small relative to the outer diameter A of the hollow mandrel, the initial discharge capacity was significantly low, compared with other batteries. The battery 1 was disassembled and its electrode assembly was observed. As a result, it was found that the non-aqueous electrolyte was unevenly distributed in the electrode assembly. This is probably because the slit width B is narrow and it was therefore difficult for the non-aqueous electrolyte to permeate the electrode assembly.

In the case of the battery 7 where the slit width B is too large relative to the outer diameter A of the hollow mandrel, the drop resistance was significantly low. The battery 7 was disassembled and its electrode assembly was observed. As a result, the displacement of the positive and negative electrodes was found at several locations. This is probably because the slit width is too large and the force of the mandrel which presses the electrode assembly is therefore insufficient, so that the electrode assembly could not withstand the impact of dropping.

These results indicate that when the electrode assembly has the porous heat-resistant layer, the outer diameter A of the mandrel and the width B of the slit need to satisfy the relation: 0.1≦B/A≦0.6, in order to obtain a battery that is excellent in both drop resistance and battery characteristics.

With respect to the batteries 48 to 54 having no porous heat-resistant layer, the overheating on the nail penetration test was remarkable. However, the drop resistance was good, regardless of the slit width B of the mandrel. The reason is probably as follows. Because the electrode assembly having no porous heat-resistant layer deforms to a suitable extent, it was firmly fixed in the battery can. Thus, even when the battery was dropped, the displacement of the electrodes of the electrode assembly was suppressed, so that no capacity loss occurred.

A comparison of the battery 2 and the battery 49 showed that the battery 2 with the porous heat-resistant layers had a higher initial discharge capacity. This means that even when the slit width is small, the existence of the porous heat-resistant layers results in good discharge characteristics. This is probably related to the fact that the porous heat-resistant layer has the function of holding the non-aqueous electrolyte. The batteries 2 and 49 were disassembled and their electrode assemblies were observed. As a result, it was found that the distribution of the non-aqueous electrolyte in the electrode assembly was more uniform in the battery 2 than the battery 49.

### Industrial Applicability

The cylindrical lithium secondary battery of the present invention has an excellent resistance to short-circuits and a high level of safety and is capable of preventing a capacity loss due to dropping. Therefore, it can be used as a power source for any portable appliances, for example, personal digital assistants and portable electronic appliances. The cylindrical lithium secondary battery of the present invention can also be used as a power source for small-sized power storage devices for home use, two-wheel motor vehicles, electric vehicles, and hybrid electric vehicles, and its application is not particularly limited.

## Claims

1. A cylindrical lithium secondary battery comprising: a cylindrical battery can having a bottom, a side wall, and an open top; an electrode assembly; a non-aqueous electrolyte; and a sealing plate covering the open top of said battery can that accommodates said electrode assembly and said non-aqueous electrolyte,
wherein said electrode assembly comprises a strip-like positive electrode and a strip-like negative electrode that are wound together with a porous heat-resistant layer and a separator interposed between the positive and negative electrodes, said positive electrode comprising a positive electrode core member and a positive electrode active material layer carried on each side of the positive electrode core member, said negative electrode comprising a negative electrode core member and a negative electrode active material layer carried on each side of the negative electrode core member, and
said electrode assembly has a central cavity into which a hollow mandrel is inserted, said hollow mandrel having a slit that extends along the entire length thereof, an outer diameter A of said hollow mandrel and a width B of said slit satisfying the relation: 0.1≦B/A≦0.6.

2. The cylindrical lithium secondary battery in accordance with claim 1, wherein a thickness: C *µ*m of said porous heat-resistant layer satisfies the relation: 2≦C≦10, and 0.2≦(C×B)/A≦3.5.

3. The cylindrical lithium secondary battery in accordance with claim 1, wherein said porous heat-resistant layer is carried on a surface of at least one of the two active material layers that are formed on both sides of the core member of at least one of said positive electrode and said negative electrode.

4. The cylindrical lithium secondary battery in accordance with claim 1, wherein said porous heat-resistant layer comprises an insulating filler.

5. The cylindrical lithium secondary battery in accordance with claim 4, wherein said insulating filler comprises an inorganic oxide.

## Amended claims

### Amended claims under Art. 19.1 PCT

**1.** (Amended) A cylindrical lithium secondary battery comprising: a cylindrical battery can having a bottom, a side wall, and an open top; an electrode assembly; a non-aqueous electrolyte; and a sealing plate covering the open top of said battery can that accommodates said electrode assembly and said non-aqueous electrolyte,
wherein said electrode assembly comprises a strip-like positive electrode and a strip-like negative electrode that are wound together with a porous heat-resistant layer and a separator interposed between the positive and negative electrodes, said positive electrode comprising a positive electrode core member and a positive electrode active material layer carried on each side of the positive electrode core member, said negative electrode comprising a negative electrode core member and a negative electrode active material layer carried on each side of the negative electrode core member,
said electrode assembly has a central cavity into which a hollow mandrel is inserted, said hollow mandrel having a slit that extends along the entire length thereof, an outer diameter A of said hollow mandrel and a width B of said slit satisfying the relation: 0.1≦B/A≦0.6, and
a thickness: C *µ*m of said porous heat-resistant layer satisfies the relation: 2≦C≦10, and 0.2≦(C×B)/A≦3.5.

**2.** (Deleted)

**3.** The cylindrical lithium secondary battery in accordance with claim 1, wherein said porous heat-resistant layer is carried on a surface of at least one of the two active material layers that are formed on both sides of the core member of at least one of said positive electrode and said negative electrode.

**4.** The cylindrical lithium secondary battery in accordance with claim 1, wherein said porous heat-resistant layer comprises an insulating filler.

**5.** The cylindrical lithium secondary battery in accordance with claim 4, wherein said insulating filler comprises an inorganic oxide.

**6.** (Added) The cylindrical lithium secondary battery in accordance with claim 1, wherein a material of said battery can comprises iron.

**7.** (Added) The cylindrical lithium secondary battery in accordance with claim 1, wherein a material of said hollow mandrel comprises stainless steel or iron.
